Europäisches Patentamt

(19) European Patent Office

Office européen des brevets

(11) Publication number: **0 008 529**
A1

(12) # EUROPEAN PATENT APPLICATION

(21) Application number: 79301682.5

(22) Date of filing: 17.08.79

(51) Int. Cl.³: **C 08 F 10/02**
**C 08 F 4/62**

(30) Priority: 19.08.78 GB 3395978

(43) Date of publication of application:
05.03.80 Bulletin 80/5

(84) Designated Contracting States:
BE DE FR GB IT NL SE

(71) Applicant: BP Chemicals Limited
Britannic House Moor Lane
London, EC2Y 9BU(GB)

(72) Inventor: Eve, Paul Leslie
BP Chemicals Limited Bo'ness Road Grangemouth
Stirlingshire, FK3 9XN Scotland(GB)

(74) Representative: Harry, John et al,
BP TRADING LIMITED Patents & Licensing Division
Chertsey Road
Sunbury-on-Thames Middlesex TW16 7LN(GB)

(54) Process for polymerising 1-olefins.

(57) A process for polymerising ethylene or mixtures thereof with up to 40 weight percent of other 1-olefinic material by contacting the monomer under particle form conditions at a temperature not greater than 112°C with a catalyst which is the product of heat activating chromium trioxide or a compound calcinable thereto supported on a refractory oxide and a catalyst modifier which is a trihydrocarbyl aluminium and an aliphatic acyclic conjugated diene. The particle form polymerisation process is preferably carried out in a liquid paraffinic hydrocarbon. The chromium compound is preferably supported on silica, alumina, zirconia, thoria, or silica-alumina. The activation is preferably carried out at 400 to 900°C. The trihydrocarbyl aluminium is preferably an aluminium alkyl wherein the alkyl group contains 1 to 10 carbon atoms. The diene can be for example butadiene or isoprene.

Croydon Printing Company Ltd.

1

## PROCESS FOR POLYMERISING 1-OLEFINS

The present invention relates to a process for polymerising 1-olefins.

More particularly the invention relates to a process for polymerising 1-olefins, for example ethylene, using a modified Phillips catalyst. Phillips catalysts have been extensively described in the literature. They are formed by supporting chromium trioxide, or a compound calcinable thereto, on a refractory oxide support material, for example silica, alumina, zirconia, thoria or silica-alumina and heating in a non-reducing atmosphere, preferably an oxidising atmosphere to produce an active polymerisation catalyst. The produced catalyst is used to polymerise 1-olefins using the so-called "solution form" or "particle form" process. In the "solution form" process the monomeric 1-olefin which is normally ethylene or a mixture of ethylene with up to about 40 wt % of other 1-olefins, is contacted with a suspension of the catalyst in a liquid hydrocarbon which is a solvent for the polymer at the polymerisation temperature employed. In the "particle form" process the monomeric 1-olefin is contacted with a suspension or a fluidised bed of the catalyst particles in a fluid medium under conditions such that the polymeric 1-olefin forms as solid particles suspended in or fluidised in the fluid medium. The fluid medium can be for example a liquid hydrocarbon or a gas. Examples of suitable liquid hydrocarbons are isobutane and n-pentane. Examples of suitable gases are nitrogen or argon mixed with the gaseous monomer, or the undiluted gaseous monomer.

UK patent specification 1,398,225 discloses a process for polymerising ethylene by contacting the ethylene in the presence of hydrogen and at a temperature lower than $100^{\circ}C$, with a catalyst produced by reacting one or more aluminium trialkyls with one or more conjugated dienes to form a polymeric organo-aluminium compound which is then reacted with chromium (VI) oxide deposited on an inorganic carrier and which has been heated to a temperature of from $300^{\circ}C$ to $1000^{\circ}C$.

Japanese patent application 51/112890 discloses a catalyst for ethylene polymerisation comprising (1) chromium oxide supported on silica and (2) the reaction product between a diolefin and a compound $AlR_3$ wherein R is hydrogen or hydrocarbon.

Japanese patent application 50/45079 discloses a process for polymerising olefins in a hydrocarbon diluent in the presence of a catalyst comprising a mixture of an organic aluminium compound and chromium oxide supported on silica characterised in that a third component which is a non-conjugated diene having the general formula $R-CH = CH-CH_2-CH = CH-R^1$ is introduced, wherein $R,R^1$ are hydrogen or alkyl.

United States patent specification No 3,351,623 discloses a catalyst for polymerising ethylene at a temperature in the range 275 to $335^{\circ}F$, ie under solution form process conditions, the catalyst being one which forms on mixing (1) an oxide component selected from the group consisting of silica; mixtures of silica and alumina containing up to 25 wt % alumina; and mixtures of chromium oxide and at least one material selected from the group consisting of silica, alumina, zirconia and thoria, at least part of the chromium being in the hexavalent state at the initial contacting of the monomer therewith, (2) an organo metal component of formula $R_xM$ wherein R is selected from the group consisting of hydrogen and alkyl, aryl, cycloalkyl, alkoxy radicals and combinations of these radicals containing up to 12 carbon atoms, at least one R group being a hydrocarbon radical; M is selected from the group consisting of aluminium, gallium, indium, thallium, zinc, boron, lead, lithium, zirconium, cobalt, magnesium and tin; and x is an integer equal to the valence of M, and (3) a vanadium component selected from the group consisting of vanadium chelates and vanadyl chelates. The catalyst system and polymerisation process of USP 3,351,623 are said to be applicable to the preparation of polyethylene and its copolymers which comprise greater than about 75 mole % ethylene. Such copolymers can be prepared from monomer mixtures which contain 3 to 8 carbon containing 1-olefins such as propylene, 1-butene, 1-pentene, 1-hexene, 3-methyl pentene-1, 1-octene and the like as well as conjugated olefins as butadiene and isoprene. USP 3,351,623 seeks to produce a catalyst that permits the use of high polymerisation temperature to obtain relatively low melt index polymer. It is not concerned with the use of low polymerisation temperatures below $275^{o}$F.

Whilst the conventional particle form polymerisation process produces polyolefins suitable for many applications, there is a need for grades of polyolefins having a broad molecular weight distribution.

It is an object of the present invention to provide a process for preparing polyethylene or ethylene copolymers having broad molecular weight distribution.

Accordingly the present invention provides a process for polymerising ethylene or mixtures of ethylene together with up to 40 wt % based on total monomer of one or more other 1-olefins copolymerisable therewith comprising contacting the monomer under particle form polymerisation conditions at a temperature not greater than $112^{o}$C with a catalyst (A) in the presence of a catalyst modifier (B), said catalyst (A) having been prepared by supporting chromium trioxide, or a chromium compound calcinable thereto, on a refractory oxide support material and heating to a temperature at least sufficient to produce an active catalyst and said catalyst modifier (B) comprising (1) a trihydrocarbyl aluminium compound and (2) an aliphatic acyclic conjugated diene.

The monomer employed in the process of the present invention is ethylene or a mixture of ethylene with up to 40% by weight of one or more other 1-olefins which are copolymerisable with the ethylene under the reaction conditions employed.

Examples of suitable other 1-olefins are propylene, 1-butene, 1-pentene, 1-hexene and 4-methyl-1-pentene.

The fluid medium employed in the particle form process conditions can be a liquid or a gas. Preferably it is a liquid. Examples of suitable liquid media are hydrocarbons which are chemically inert and non-deleterious to the modified catalyst under the reaction conditions. Preferred liquid media are paraffins or cycloparaffins having from 3-30 carbon atoms per molecule, for example isopentane, isobutane, cyclohexane. Most preferably the liquid medium is isobutane.

When a liquid medium is employed in the process of the present invention preferably the concentration of monomer therein is in the range 2-10 wt % although concentrations outside this range can be employed if desired.

The polymerisation temperature employed in the process of the present invention is suitably in the range 50 to 112°C, preferably 80 to 110°C.

The polymerisation pressure is preferably in the range 2 to 100 bar when the fluid medium is a liquid and 1 to 60 bar when the fluid medium is a gas. The residence or reaction time can vary from a few minutes to several hours and is generally in the range 15 minutes to 3 hours. The particle form process can be conducted under batch or continuous polymerisation conditions. Preferably the conditions are continuous. Preferred apparatus for conducting the reaction under continuous conditions in a liquid medium is described in UK Patent Specification 899,156.

For further details of examples of particle form process conditions and apparatus which can suitably be employed in the present invention, reference may be made to UK patent specification Nos 899,156, 886,784 and 853,414.

The chromium is introduced into the catalyst of the present invention by impregnating a refractory oxide support material with; chromium trioxide or a compound calcinable thereto. Examples of suitable chromium compounds are chromium sesquioxide, chromic nitrate, chromic sulphate, chromic acetate, ammonium chromate, chromium carbonate, chromyl chloride and tertiary butyl chromate. Preferred are chromium trioxide itself, chromic acetate and tertiary butyl chromate. The quantity of chromium in the final catalyst is suitably in the range 0.2 to 30 wt %, preferably 0.3 to 5.0 wt %.

Examples of suitable refractory oxides which can be employed in the process of the present invention are silica, alumina, zirconia, thoria or composites thereof, for example silica-alumina. When the refractory oxide support material employed in the present invention is silica, it preferably has a mean particle diameter in the range 20 to 150 microns; and a surface area in the range 150 to 800 square metres per gramme.

The supporting of the chromium compound on the refractory oxide support material can be achieved, for example, by dissolving a soluble chromium compound in a volatile liquid impregnating the support material with the solution and evaporating the solvent; by impregnating the support with a liquid chromium compound, eg chromyl chloride; by passing the vapour of a volatile chromium compound, eg chromyl chloride, into a bed of the support material; or by mixing together a finely divided chromium compound and the support material in the presence of a small quantity of solvent, the quantity being insufficient to cause substantial agglomeration of the support material, continuing the mixing until a substantially homogeneous mix is obtained and then evaporating the solvent. Examples of solutions that can be used to impregnate the support material are chromium trioxide/water, ammonium chromate/ water, chromium acetate/water, tertiary butyl chromate/hexane, chromyl chloride/chloroform.

The temperature to which the supported chromium compound must be heated to form an active polymerisation catalyst (hereinafter referred to as the activation temperature) is at least $250^\circ$C and not higher than the temperature at which the support commences to sinter. Preferably the activation temperature is in the range 400 to $900^\circ$C, most preferably 500 to $800^\circ$C. In general, the higher the activation temperature employed within the aforementioned ranges, the lower becomes the average molecular weight of polyolefin produced over the catalyst. The heating time is suitably within the range 5 minutes to 24 hours, preferably 30 minutes to 15 hours although times outside the broader range can be employed if desired.

It was formerly believed that to be an effective polymerisation catalyst a "Phillips" catalyst must contain at least some chromium in hexavalent form. Whilst it is true that most, if not all, "Phillips" catalysts do contain hexavalent chromium it is now believed that the olefin polymerisation catalysis may operate through chromium in valency states below 6. Nevertheless it is desirable during the heat activation of catalysts of this type, including the catalyst employed in the process of the present invention, that conditions which favour the formation of, or retention of, chromium in the higher valency states should be employed. The heat activation is preferably carried out in a non-reducing atmosphere and most preferably in an oxidising atmosphere or in vacuo. Dry air is an example of a suitable oxidising atmosphere. The heat activation must be performed under anhydrous or dehydrating conditions and the activated catalyst must be protected from ingress of moisture.

The catalyst modifier employed in the process of the present invention comprises two components (1) a trihydrocarbyl aluminium compound and (2) an aliphatic acyclic conjugated diene.

The hydrocarbyl groups of the trihydrocarbyl aluminium compound are suitably alkyl, aryl, or alkaryl groups. The three groups attached to the aluminium atom may be the same or different. Preferably the hydrocarbyl groups are alkyl groups containing 1 to 10 carbon atoms, for example triethyl aluminium, triisobutyl aluminium or trioctyl aluminium. Triethyl aluminium is particularly preferred.

The quantity of trihydrocarbyl aluminium compound employed in the present invention is suitably 0.1 to 20 moles and preferably 0.5 to 10 moles per gram atom of chromium. Preferably, the quantity employed is in the range 0.1 to 2.0 millimoles per gram of catalyst (A).

The aliphatic conjugated diene or the present invention is preferably a diene having the general formula $R^1CH:CR^2CH:CHR^3$ wherein $R^1$, $R^2$ and $R^3$ can be the same or different and are hydrogen or alkyl groups containing 1 to 10 carbon atoms. The preferred dienes are butadiene and isoprene.

The quantity of aliphatic conjugated diene employed in the present invention is suitably 10 to 5000 moles, preferably 100 to 1000 moles per gram atom of chromium in the catalyst. Preferably the quantity of conjugated diene is in the range 0.1 to 10 moles per 100 moles of monomeric 1-olefin employed.

The trihydrocarbyl aluminium and the aliphatic conjugated diene employed in the present invention can be introduced into the polymerisation in admixture with or separately from the catalyst. If the polymerisation is conducted in a liquid medium the catalyst modifier (ie the aluminium alkyl and the diene) is preferably dissolved or suspended in some of this liquid prior to adding to the polymerisation vessel.

If desired, the polymerisation process of the present invention can be conducted in the presence of hydrogen gas to lower the average molecular weight of the polymer produced.

Methods of recovering polyolefins produced by the particle form polymerisation process of the present invention are well known in the art.

The present invention is particularly useful for making polyethylene or ethylene copolymers having broad molecular weight distribution, low melt index (ie high average molecular weight) and high density.

The invention is illustrated in the following Examples wherein Examples 1, 2 and 3 are according to the invention and Examples A and B are by way of comparison.

Catalyst Preparation

320 kg of a commercial chromia on silica catalyst (ID 969, W R Grace & Co) was heat activated in a 1.07 m diameter gas fired activator with a fluidising air flow of 91 mm/s at about atmospheric pressure. The temperature of activation was held at $1350^{o}F$ ($732^{o}C$) for 5 hours. The catalyst recovery was 97%. The activated catalyst contained 0.94% by weight chromium. After activation the catalyst was stored and handled in a dry nitrogen atmosphere.

Polymerisation

Bench scale polymerisation was carried out in a 2.3 litre stainless steel stirred autoclave. The reactor was purged with nitrogen, baked out for 2 hours at $110^{o}C$, then cooled to polymerisation temperature. Approximately 400 mg of the catalyst prepared as described above was charged to the reactor followed by the appropriate amounts (see Table) of triethylaluminium and diene (the catalyst modifier components) in a 1 litre of isobutane.

The reactor temperature was maintained at polymerisation temperature and ethylene was added to bring the total pressure in the reactor to 41.4 bar. Ethylene was added continuously throughout the run to maintain this pressure.

Polymerisation and polymer property data are shown in Table 1.

## TABLE 1

### Polymerisation and Polymer Property Data for Modified Phillips Catalysts

| Example | Catalyst Modified With | Polym Temp (°C) | $MI_{21.6}$ | Kd |
|---------|------------------------|-----------------|-------------|-----|
| 1 | Triethyl aluminium (42 mg/g catalyst) + butadiene (5.0 g/g catalyst) | 98 | 6.4 | 7.6 |
| 2 | Triethyl aluminium (42 mg/g catalyst) + isoprene (8.8 g/g catalyst) | 98 | 6.6 | 7.3 |
| A | Triethyl aluminium (42 mg/g catalyst) | 98 | 9.5 | 4.6 |

Example A is a comparative example not according to the invention.

The Kd value is determined by a method similar to that given in Sabia, R., J. Appl. Polymer Sci., 1963, 7, 347. Kd is a measure of shear response of the polymer and generally, Kd increased with breadth of polymer molecular weight distribution. $MI_{21.6}$ is the melt index measured by ASTM method 1238 using a 21.6 kg load. The units are grammes per 10 minutes. It can be seen from a comparison of Examples 1 and 2 with Example A that modification of the catalyst with trihydrocarbyl aluminium and conjugated diene gives polymer of higher Kd, that is, of broader molecular weight distribution, than modification of the catalyst with trihydrocarbyl aluminium alone.

## Example 3

The Phillips catalyst (ID 969) activation was carried out in a similar manner to that described for Examples 1 and 2 except that an electrically heated activator of diameter 200 mm, a fluidising air flow of 45 mm/s and an activation temperature of 500°C were used. The catalyst recovery was 85%.

Bench reactor polymerisation was carried out as for Examples 1 and 2. Polymerisation and polymer property data are shown in Table 2.

The results show that polymer of higher Kd, that is, broader molecular weight distribution, was produced over the Phillips catalyst modified with triethyl aluminium and butadiene (this invention) than over the same catalyst modified with triethyl aluminium and 1,4-hexadiene.

## Table 2

### Polymerisation and Polymer Property Data for Modified Phillips Catalysts

| Example | Catalyst Modified with | Polymerisation Temperature ($^{o}$C) | MI$_{21.6}$ | Kd |
|---------|------------------------|-------------------------------------|-------------|-----|
| 3 | Triethyl aluminium (42 mg/g catalyst) + butadiene (3.9 g/g catalyst) | 104 | 7.0 | 8.9 |
| B | Triethyl aluminium (42 mg/g catalyst) + 1,4-hexadiene (4.1 g/g catalyst) | 104 | 10.2 | 4.2 |

Claims:

1. A process for polymerising ethylene or mixtures of ethylene together with up to 40 wt % based on total monomer of one or more other 1-olefins copolymerisable therewith comprising contacting the monomer under particle form polymerisation conditions at a temperature not greater than 112°C with a catalyst (A) in the presence of a catalyst modifier (B), said catalyst (A) having been prepared by supporting chromium trioxide, or a chromium compound calcinable thereto, on a refractory oxide support material and heating to a temperature at least sufficient to produce an active catalyst and said catalyst modifier (B) comprising (1) a trihydrocarbyl aluminium compound and (2) an aliphatic acyclic conjugated diene.

2. A process as claimed in claim 1 wherein the fluid medium in which the particle form polymerisation is conducted is a liquid paraffin hydrocarbon.

3. A process as claimed in claim 2 wherein the paraffin hydrocarbon is isopentane or isobutane and wherein the polymerisation is carried out at a temperature in the range 50 to 112°C.

4. A process as claimed in any one of the preceding claims wherein the refractory oxide support material is silica.

5. A process as claimed in any one of the preceding claims wherein the hydrocarbyl groups of the trihydrocarbyl aluminium compound are alkyl groups.

6. A process as claimed in any one of the preceding claims wherein the quantity of trihydrocarbyl aluminium compound employed is 0.1 to 20 moles per gram atom of chromium in the catalyst.

7. A process as claimed in any one of the preceding claims wherein the quantity of trihydrocarbyl aluminium compound employed is in the range 0.1 to 2.0 millimoles per gram of catalyst (A).

0008529

8.  A process as claimed in any one of the preceding claims wherein the conjugated diene is butadiene or isoprene.

9.  A process as claimed in any one of the preceding claims wherein the quantity of conjugated diene is in the range 100 to 1000 moles per gram atom of chromium in the catalyst.

10. A process as claimed in any one of the preceding claims wherein the quantity of conjugated diene is in the range 0.1 to 10 moles per 100 moles of monomeric 1-olefin employed.

# European Patent Office

# EUROPEAN SEARCH REPORT

## DOCUMENTS CONSIDERED TO BE RELEVANT

| Category | Citation of document with indication, where appropriate, of relevant passages | Relevant to claim |
|---|---|---|
| D | GB - A - 1 398 225 (VEBA-CHEMIE) <br> * Claims 1,2,7 * | 1-5,8 |
| A | US - A - 3 098 062 (J.P. HOGAN) <br> * Claim 1; column 2, lines 58-67 * | 1 |
| A | FR - A - 2 002 120 (HOECHST) <br> * Claim 1 * | 1 |
| A | CHEMICAL ABSTRACTS, vol. 78, (1973) ref. 137044x, nr. 22, 4 juni 1973, page 29 Columbus, Ohio, US <br> & JP - A - 72 42978 (ASAHI CHE-MICAL INDUSTRY CO. LTD.) 18-12-1972 <br> * Abstract * | 1 |
| DA | US - A - 3 351 623 (D.W. WALKER) <br> * Claims 1,3; column 4, lines 23-32 * | 1 |

CLASSIFICATION OF THE APPLICATION (Int. Cl. ³)

C 08 F 10/02
C 08 F 4/62

TECHNICAL FIELDS SEARCHED (Int.Cl. ³)

C 08 F 4/62
C 08 F 10/00-
C 08 F 10/14
C 08 F 110/00-
C 08 F 110/14
C 08 F 210/00-
C 08 F 210/18

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search <br> The Hague | Date of completion of the search <br> 30-11-1979 | Examiner <br> PERMENTIER |
|---|---|---|

EPO Form 1503.1 06.78